Europäisches Patentamt

European Patent Office

Office européen des brevets

(19)

(11) Publication number: **0 117 069**
**B1**

# EUROPEAN PATENT SPECIFICATION

(12)

(45) Date of publication of patent specification: **20.04.88**

(51) Int. Cl.⁴: **F 16 H 11/06**

(21) Application number: **84300367.4**

(22) Date of filing: **20.01.84**

(54) **Method of controlling a continuously variable transmission.**

(30) Priority: **07.02.83 JP 17551/83**

(43) Date of publication of application:
**29.08.84 Bulletin 84/35**

(45) Publication of the grant of the patent:
**20.04.88 Bulletin 88/16**

(84) Designated Contracting States:
**DE FR GB**

(56) References cited:
**EP-A-0 061 735**
**EP-A-0 063 786**
**EP-A-0 073 475**
**GB-A-2 058 257**
**GB-A-2 076 484**

(73) Proprietor: **TOYOTA JIDOSHA KABUSHIKI KAISHA**
**1, Toyota-cho Toyota-shi**
**Aichi-ken 471 (JP)**

(72) Inventor: **Itoh, Hiroshi**
**3, 6 Banchi, 6-chome Ima-cho**
**Toyota-shi Aichi-ken (JP)**
Inventor: **Takada, Mitsuru**
**530, Toyota-cho**
**Toyota-shi Aichi-ken (JP)**

(74) Representative: **Ben-Nathan, Laurence Albert**
**et al**
**Urquhart-Dykes & Lord 91 Wimpole Street**
**London W1M 8AH (GB)**

Courier Press, Leamington Spa, England.

## Description

The present invention relates to a method of controlling a continuously variable transmission and particularly to a method of controlling a desired engine speed of an engine equipped with a continuously variable transmission.

In a vehicle equipped with a continuously variable transmission, the Applicants have previously proposed that a desired engine speed at a steady state is determined to be a function of throttle opening in order to obtain a minimum fuel consumption at a steady state. The horsepower of an engine is determined to be a function of throttle opening. In such an engine equipped with a continuously variable transmission, the engine speed varies greatly for relatively small changes of throttle opening at low vehicle speeds. For example, when the throttle opening varies by a few percent, the engine speed causes a variation in the engine speed of up to 1000 r.p.m. Such a wide variation of the engine speed impairs the drivability of the vehicle. As the desired engine speed is designed so as to obtain a minimum fuel consumption regardless of vehicle speed, the vehicle speed does not increase promptly at higher vehicle speeds even when the accelerator pedal is depressed by a large amount. In this condition, the vehicle speed slowly increases in order to obtain a minimum fuel consumption. This results in poor drivability of the vehicle.

The present invention was made in view of the foregoing arrangement and to overcome the above-mentioned disadvantages. It is an object of this invention to provide a method of controlling a continuously variable transmission which improves the drivability of a vehicle fitted therewith.

GB—A—2058257 as well as EP—A—63786 describe methods in accordance with the preamble of claim 1. The invention lies in the characterising features of claim 1.

The above object, features and advantages of the present invention will become more apparent from the following description of a preferred embodiment taken in conjunction with the accompanying drawings, in which:—

Fig. 1 is a schematic view of a vehicle transmission which is adapted to utilize a method according to the present invention;

Fig. 2 is a block diagram of an electronic control apparatus employed in the continuously variable transmission;

Fig. 3 is a graph showing the relation between a throttle opening and a desired engine speed; and

Fig. 4 is a flow chart of the operating procedure of the electronic control apparatus employed in the continuously variable transmission.

The present invention is described in detail with reference to the accompanying drawings which illustrate an embodiment of the present invention.

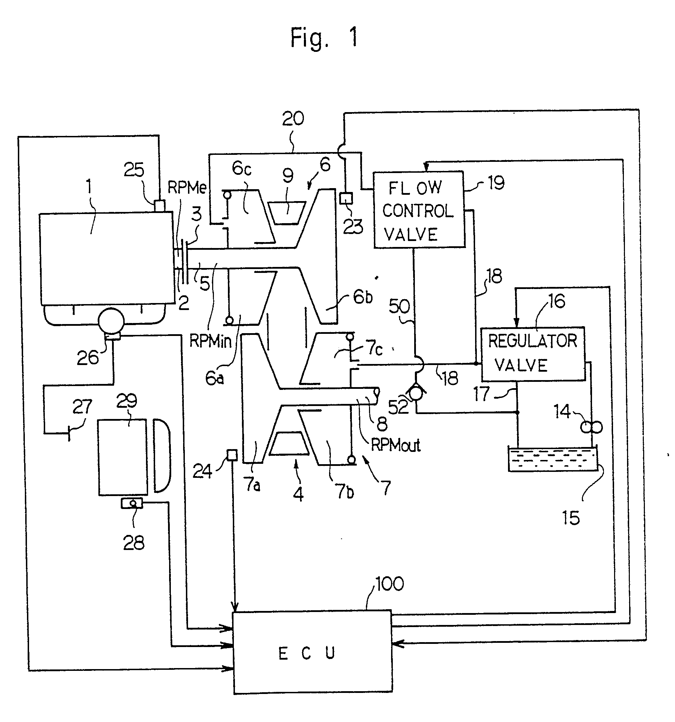

Figure 1 shows a schematic view of a vehicle transmission which utilizes a method of controlling a continuously variable transmission according to the present invention. An engine 1 is connected, through a crank shaft 2 and a clutch 3, to a shaft 5. The shaft 5 is an input shaft connected to a continuously variable transmission (hereinafter referred to as CVT) 4. The CVT 4 has two pulleys 6 and 7. The pulley 6 is a driving pulley mounted on the driving and input shaft 5 to be driven by the engine 1. The other pulley 7 is a driven pulley mounted on a driven and output shaft 8. The torque of the shaft 8 is transmitted to wheels (not shown in drawings). A torque transmitting V-belt 9 extends between the pulleys 6 and 7. The driving pulley 6 has a member 6a, which is axially movably on and rotates with the input shaft 5 and a member 6b, which is fixed to and rotates with the input shaft 5. The member 6a is moved axially in accordance with a pressure generated in a hydraulic cylinder 6c. When the member 6a moves axially in the direction towards the opposite member 6b, the width defined between the members 6a and 6b is narrowed. This results in an increase in the effective diameter of the pulley 6. As a result, the speed ratio "e" (the rotating speed $RPM_{out}$ of the driven pulley 7/ the rotating speed $RPM_{in}$ of the driving pulley 6) is increased. The speed $RPM_{in}$ of the driving pulley is equal to engine speed $RPM_e$.

Similarly, the driven pulley 7 has a member 7b, which is axially movable on and rotates with the output shaft 8 and a member 7a, which is fixed to and rotates with the output shaft 8. The member 7b is moved axially by a pressure generated in a hydraulic cylinder 7c. When the member 7b moves axially in the direction towards the opposite member 7a, the width defined between the members 7a and 7b is narrowed, thereby increasing the effective diameter of the pulley 7. In order to minimize power loss resulting from power consumed by an oil pump 14, the hydraulic pressure in the cylinder 7c is controlled to be as small as possible while keeping a slip-free torque transfer between the driven pulley 7 and the belt 9. The hydraulic pressure in the cylinder 6c is controlled in order to vary the speed ratios. The value of the pressure in the cylinder 6c is designed to be smaller than that of the pressure in the cylinder 7c. However, as the total effective area of the cylinder 6c to which the hydraulic pressure is applied is designed to be larger than that of the cylinder 7c, it is possible to obtain the speed ratio more than or equal to one. The CVT 4 is supplied with fluid in accordance with the following procedure:

The motor driven oil pump 14 supplies oil from a reservoir 15 to a regulator valve 16. The regulator valve 16 controls the pressure of oil supplied to the oil passage 18 by adjusting the amount of drained oil, whereby the regulator valve 16 generates a line pressure in the oil passage 18. The regulator valve 16 supplies oil at this line pressure through the oil passage 18 to the cylinder 7c of the driven pulley 7 and also to a flow control valve 19. The flow control valve 19 is a three port connection valve and includes an inlet port which communicates with the passage 18, a drain port which communicates with a drain passage 50 and an outlet port which communicates through an oil passage 20 with the cylinder 6c of the driving pulley 6. When the valve 19 is in its first position, the inlet port communicates with the outlet port. Then, when the valve 19 is in its second position, there is no communication between any of the three ports. Finally, when the valve 19 is in its third position, the outlet port communicates with the drain port. A check valve 52 is provided in the drain passage 50. The check valve 52 allows the oil flow only from the valve 19 to the oil reservoir 15. A sensor 23 detects the rotating speed $RPM_{in}$ of the driving pulley 6. A sensor 24 detects the rotating speed $RPM_{out}$ of the driven pulley 7. A sensor 25 is an engine coolant temperature sensor for detecting the temperature of the coolant in the engine 1. A sensor 26 detects a throttle opening of the throttle valve, which is actuated by movement of an accelerator pedal 27 installed adjacent the drivers' seat 29. A sensor 28 detects the shift position of the transmission installed in the vehicle. When an automatic transmission is installed in the vehicle instead of a manual transmission, the sensor 28 detects the shift range of the automatic transmission.

When the hydraulic pressure in the cylinder 7c, associated with the movable member 7b of the driven pulley 7, increases, the member 7b is forced to move towards the opposite member 7a. Therefore, the contact points between the pulley 7 and the belt 9 move to positions at outer regions of the driven pulley 7. The value of the line pressure is controlled so that it does not cause slip between the belt 9 and the pulley 7. When the hydraulic pressure in the cylinder 6c, associated with the driving pulley 6, increases, the movable member 6a of the driving pulley 6 is forced to move towards the opposite member 6b. As a result, the contact points between the driving pulley 6 and the belt 9 move to positions at outer regions of the driving pulley 6. Thus, the speed ratio of the CVT 4 is controlled.

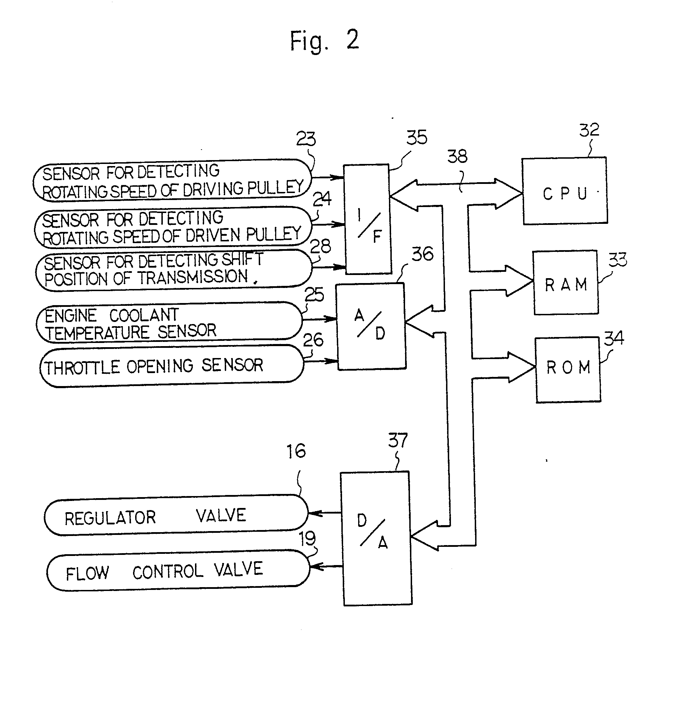

An electronic control unit (hereinafter referred to as ECU) 100 controls the regulator valve 16 and the flow control valve 19 in accordance with signals from the sensors. Figure 2 shows that the ECU 100 functions as a digital computer, and has a central processing unit (hereinafter referred to as CPU) 32 which carries out the arithmetic and logic processing means, an inter-face (hereinafter referred to as I/F) 35, an analog-digital converter (hereinafter referred to as A/D) 36 a random-access memory (hereinafter referred to as RAM) 33 which temporarily stores the calculated data of the CPU 32, a read-only memory (hereinafter referred to as ROM) 34 which stores a predetermined control program and arithmetic constants therein, and a digital-analog converter (hereinafter referred to as D/A) 37. These are interconnected by a common bus 38. For example, the I/F 35 receives the output signals of the sensor 23 for detecting the rotating speed $RPM_{in}$ of the driving pulley 6, the sensor 24 for detecting the rotating speed $RPM_{out}$ of the driven pulley 7, and the sensor 28 for detecting the shift position of the transmission. The A/D 36 receives the output signals of the engine coolant temperature sensor 25 and the throttle opening sensor 26. The CPU 32, a microprocessor, then compares the received information against any stored information, and issues an output to the D/A 37 which then subsequently output the appropriate instructions to the regulator valve 16 and the flow control valve 19.

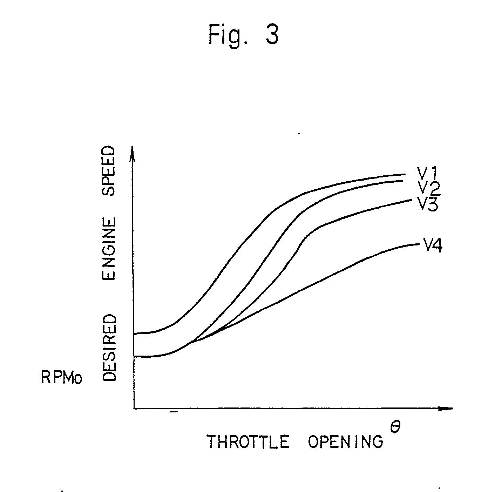

Figure 3 shows the relationship between the throttle opening $\theta$ and the desired engine speed $RPM_o$. The references, V1, V2, V3 and V4 indicate the vehicle speeds, and they are designed to satisfy the following relation:

$$V1 > V2 > V3 > V4$$

For example, V1, V2, V3, and V4 are selected to have an interval of 20 Km/h. The desired engine speed $RPM_o$ at a high vehicle speed is selected to have a larger value than that at a low vehicle speed.

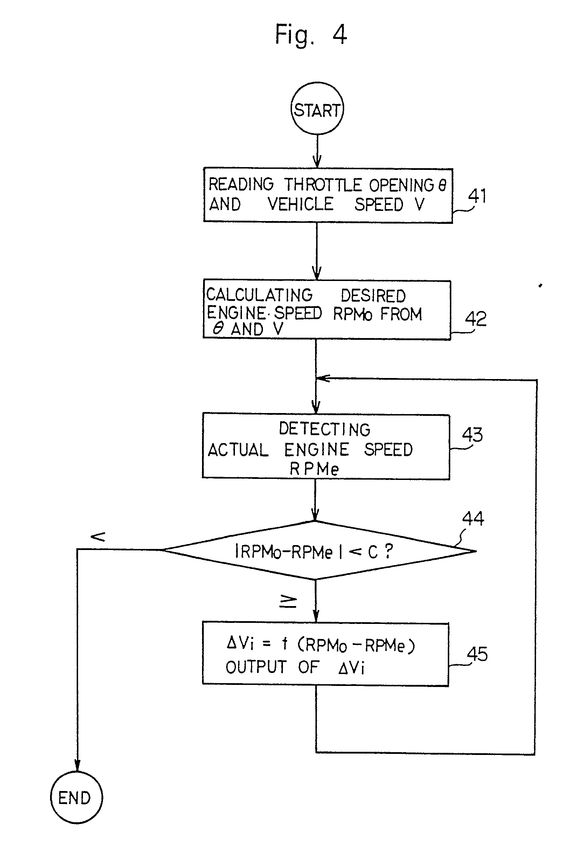

Figure 4 shows a flow chart of the operating procedure of the electronic control apparatus employed in the continuously variable transmission. The desired engine speed $RPM_o$ is calculated from the detected throttle opening $\theta$ and vehicle speed V. The actual engine speed $RPM_e$, which is equal to the rotating speed $RPM_{in}$ of the CVT 4 is controlled to becomed the desired engine speed $RPM_o$ by the use of a feedback control.

In step 41, the throttle opening $\theta$ and the vehicle speed V are read. The program proceeds to step 42. In step 42, the desired engine speed $RPM_o$ is calculated from the graph which defines the desired engine speed, shown in Figure 3. As the ROM 34 has a relatively small capacity, the typical vehicle speeds only are memorized in the ROM 34. In this condition, when the actual vehicle speed V is different from the data stored in the ROM 34, the desired engine speed $RPM_o$ is determined by the following procedure. For example, if the actual vehicle speed V is in the range between the stored vehicle speed V1 and V2, the desired engine speed at the actual vehicle speed V would be in proportion to its position between the desired engine speeds at the vehicle speeds V1 and V2. The program proceeds to step 43. In step 43, the actual engine speed $RPM_e$ is represented by the output signal of the sensor 23. The program proceeds to step 44. Step 44 determines whether or not $(RPM_o - PRM_e)$ is less than C (a constant). If $(RPM_o - RPM_e)$ is less than C, the program ends. Conversely, if $(RPM_o - RPM_e)$ is equal to or greater than C, the program proceeds to step 45. In step 45, the amount $\Delta Vi$ of the change of the input voltage Vi is a function of $(RPM_o - RPM_e)$ and is calculated. Step 45 outputs the following value $\Delta Vi$:

$$\Delta Vi = f(RPM_o - RPM_e)$$

If the actual engine speed $RPM_e$ is less than the

desired engine speed $RPM_o$, fluid is drained through the flow control valve 19 from the cylinder 6c. As a result, the speed ratio e of the CVT 4 is made to decrease. This results in an increase in the engine speed $RPM_e$. If the actual engine speed $RPM_e$ is larger than the desired engine speed $RPM_o$, fluid is supplied through the flow control valve 19 to the cylinder 6c. As a result, the transmitting speed ratio e of the CVT 4 is made to increase. This results in a decrease of the actual engine speed $RPM_e$. The output signal of step 45 is fed back to step 43. In steps 43 to 45, the actual engine speed $RPM_e$ is controlled to have a value nearly equal to the desired engine speed $RPM_o$.

Instead of a throttle opening, a pressure within an intake pipe for inducing air from the ambient atmosphere, may be employed. The pressure within the intake pipe is in proportion to the throttle opening. In a continuously variable transmission in which the pressure within the intake pipe is employed instead of a throttle opening, the desired engine speed is determined to be a function of the pressure within the intake pipe and the vehicle speed.

According to the present embodiment, the engine speed is selected as a controlled variable. The present invention may be applied to a CVT 4 in which a speed ratio is adopted as the controlled variable. In this case, the desired speed ratio $e_o$ is defined as the ratio $RPM_{out}/RPM_o$. The actual speed ratio e is calculated from the ratio $RPM_{out}/RPM_{in}$.

## Claims

1. A method for controlling a continuously variable transmission (4) for motor vehicles, having an input shaft (5) for connecting an engine (1) to the continuously variable transmission (4), a driving pulley (6) mounted on the input shaft (5), the driving pulley (6) including a non-movable member (6b) and a movable member (6a), the movable member (6a) being actuated by a hydraulic cylinder (6c) to form a V-shaped opening between the non-movable member (6b) and the movable member (6a), an output shaft (8), a driven pulley (7) mounted on the output shaft (8), the driven pulley (7) including another non-movable member (7a) and another movable member (7b), the movable member (7b) being similarly actuated by another hydraulic cylinder (7c) to form another V-shaped opening between the another non-movable member (7a) and the another movable member (7b) and a flexible belt member (9) spanning said pulleys (6 and 7), and an electronic control unit (100) including memory means for storing data representative of desired operating conditions of the transmission and comparison means (32) for comparing input data of actual operating conditions with data stored in said memory means comprising the steps of:

detecting an actual opening of a throttle valve which is proportional to an amount of fuel injected into the engine (1), and

detecting an actual engine speed,

comparing the detected data with data stored in said memory means, and

adjusting at least one of said movable members (6a) in accordance with the comparison between the detected data and the stored data;

characterized in that the memory means stores data representative of a plurality of relationships between the opening of the throttle valve and the desired engine speed for different vehicle speeds, and the method further comprises the steps of

calculating an actual vehicle speed,

calculating a desired engine speed (RPMo) from the data stored in the memory means, whereby when one of the plurality of relationships is chosen in accordance with the calculated actual vehicle speed, a desired engine speed is calculated in accordance with the detected throttle opening,

comparing either the detected actual engine speed or an actual speed ratio ($RPM_{out}/RPM_{in}$) with the desired engine speed or a desired speed ratio ($RPM_{out}/RPMo$); and

controlling an amount of hydraulic fluid injected into one of the hydraulic cylinders (6c), in accordance with the comparison between the actual and desired engine speeds or speed ratios.

2. A method as claimed in Claim 1, wherein the detecting of the actual opening of the throttle valve is performed by a throttle opening sensor (26).

3. A method as claimed in Claim 1, wherein the detecting of the actual opening of the throttle valve is performed by a pressure sensor within an intake pipe of the engine.

4. A method as claimed in any of Claims 1—3 including the step of comparing the absolute value of the difference between the actual and the desired engine speeds with a constant: and

when said difference is at least equal to said constant the following steps are taken: communicating the hydraulic cylinder (6c) of the driving pulley (6) with a drain passage (50), and drawing hydraulic fluid therefrom, when the desired engine speed is larger than the actual engine speed, or communicating said hydraulic cylinder (6c) with a hydraulic fluid supply passage (18) for a flow control means (19), and supplying hydraulic fluid thereto, when the actual engine speed is larger than the desired engine speed, whereby the actual engine speed is adjusted to become the desired engine speed.

5. A method as claimed in any of Claims 1—3 including the step of comparing an absolute value of the difference between the desired speed ratio and the actual speed ratio with a constant; and

when said difference is at least equal to said constant the following steps are taken; communicating the hydraulic cylinder (6c) of the driving pulley (6) with the hydraulic fluid supply passage (18) of the flow control means (19), and supplying hydraulic fluid thereto, when the desired speed ratio is larger than the actual speed ratio, or communicating said hydraulic cylinder (6c) with the drain passage (50), and drawing hydraulic fluid therefrom, when the actual speed ratio is larger than the desired speed ratio.

## Patentansprüche

1. Verfahren zum Steuern einer stufenlos veränderlichen Übersetzung (4) für Kraftfahrzeuge mit einer Antriebswelle (5) zum Anschliessen eines Motors (1) an die stufenlos veränderliche Übersetzung (4), einer auf der Antriebswelle (5) befestigten Antriebsscheibe (6), wobei die Antriebsscheibe (6) ein nicht bewegliches Glied (6b) und ein bewegliches Glied (6a) umfasst, wobei das bewegliche Glied (6a) durch einen hydraulischen Zylinder (6c) betätigt wird, um eine V-förmige Öffnung zwischen dem nicht beweglichen Glied (6b) und dem beweglichen Glied (6a) zu bilden, einer Abtriebswelle (8) einer auf der Abtriebswelle (8) befestigten Abtriebsscheibe (7), wobei die Abtriebsscheibe (7) ein weiteres nicht bewegliches Glied (7a) und ein weiteres bewegliches Glied (7b) umfasst, wobei das bewegliche Glied (7b) auf ähnliche Weise durch einen weiteren hydraulischen Zylinder (7c) betätigt wird, um eine weitere V-förmige Öffnung zwischen dem weiteren nicht beweglichen Glied (7a) und dem weiteren beweglichen Glied (7b) zu bilden und einem die besagten Scheiben (6 und 7) unspannenden flexiblen Riemenglied (9), und einer elektronischen Steuereinheit (100) mit Speichermitteln zum Einspeichern von gewünschte Betriebsbedingungen der Übersetzung darstellenden Daten und Vergleichsmitteln (32) zum Vergleichen von Eingangsdaten von Betriebsistbedingungen mit im besagten Speichermittel gespeicherten Daten, mit folgenden Schritten:

Erfassen einer Istöffnung eines Drosselventils, die proportional zu einer in den Motor (1) eingespritzten Brennstoffmenge ist,

Erfasen einer Motoristgeschwindigkeit,

Vergleichen der erfassten Daten mit im besagten Speichermittel gespeicherten Daten, und

Einstellen mindestens eines der besagten beweglichen Glieder (6a) entsprechend dem Vergleich zwischen den erfassten Daten und den gespeicherten Daten;

dadurch gekennzeichnet, dass das Speichermittel eine Mehrzahl von Verhältnisse zwischen der Öffnung des Drosselventils und den Motorsolldrehzahlen für verschiedene Fahrzeuggeschwindigkeiten darstellende Daten speichert, und das Verfahren weiterhin folgende Schritt umfasst:

Berechnen einer Fahrzeugistgeschwindigkeit,

Berechnen einer Motorsolldrehzahl aus den im Speichermittel eingespeicherten Daten, wodurch bei Wahl einer der Mehrzahl von Verhältnissen entsprechend der berechneten Fahrzeugistgeschwindigkeit eine Motorsolldrehzahl entsprechend der erfassten Drosselöffnung berechnet wird,

Vergleichen entweder der erfassten Motoristdrehzahl oder eines Istdrehzahlverhältnisses ($U/min_{ab}:U/min_{an}$) mit der Motorsolldrehzahl oder einem Solldrehzahlverhältnis ($U/min_{ab}:U/min_o$); und

Steuern einer in einen der hydraulischen Zylinder (6c) eingeführten Hydraulikflüssigkeitsmenge entsprechen dem Vergleich zwischen den Motorist- und Solldrehzahlen oder -drehzahlverhältnissen.

2. Verfahren nach Anspruch 1, dadurch gekennzeichnet, dass die Erfassung der Istöffnung des Drosselventils durch einen Drosselöffnungsfühler (26) durchgeführt wird.

3. Verfahren nach Anspruch 1, dadurch gekennzeichnet, dass das Erfassen der Istöffnung des Drosselventils durch einen Druckfühler in einem Einlassrohr des Motors durchgeführt wird.

4. Verfahren nach einem beliebigen der Ansprüche 1 bis 3, gekennzeichnet durch den Schritt des Vergleichens des Absolutwerts des Unterschieds zwischen den Motorist- und solldrehzahlen mit einer Konstanten; und dass, wenn der besagte Unterschied mindestens der besagten Konstanten gleich ist, die folgenden Schritte unternommen werden: Inverbindungsetzen des Hydraulikzylinders (6c) der Antriebsscheibe (6) mit einer Ablaufdurchführung (50) und Abziehen von Hydraulikflüssigkeit aus derselben, wenn die Motorsolldrehzahl höher als die Motoristdrehzahl ist, oder Inverbindungsetzen des besagten Hydraulikzylinders (6c) mit einer Hydraulikflüssigkeitszufühdurchführung (18) für ein Flusssteuermittel (19) und Zuführen von Hydraulikflüssigkeit zu derselben, wenn die Motoristdrehzahl höher als die Motorsolldrehzahl ist, wodurch die Motoristdrehzahl zur Motorsolldrehzahl hin eingestellt wird.

5. Verfahren nach einem beliebigen der Ansprüche 1 bis 3, gekennzeichnet, durch den Schritt des Vergleichens eines Absolutwerts des Unterschiedes zwischen dem Solldrehzahlverhältnis und dem Istdrehzahlverhältnis mit einer Konstanten; und dass,

wenn der besagte Unterschied mindestens der besagten Konstanten gleich ist, die folgenden Schritte unternommen werden; Inverbindungsetzen des Hydraulikzylinders (6c) der Antriebsscheibe (6) mit der Hydraulikflüssigkeitszuführungsdurchführung (18) des Flusssteuermittels (19) und Zuführen von Hydraulikflüssigkeit zu derselben, wenn das Drehzahlsollverhältnis grösser als das Drehzahlistverhältnis ist, oder Inverbindungsetzen des besagten Hydraulikzylinders (6c) mit der Ablaufdurchführung (50) und Abziehen von Hydraulikflüssigkeit aus derselben, wenn das Drehzahlistverhältnis grösser als das Drehzahlsollverhältnis ist.

## Revendications

1. Un procédé de commande d'une transmission continuellement variable (4) pour véhicules à moteur, comportant un arbre d'entrée (5) pour relier un moteur (1) à la transmission continuellement variable (4), une poulie motrice (6) montée sur l'arbre d'entrée (5), la poulie motrice (6) comportant un organe non mobile (6b) et un organe mobile (6a)

nl'organe mobile (6a) étant actionné par un vérin hydraulique (6c) pour former une ouverture en forme de V entre l'organe non mobile (6b) et l'organe mobile (6a), un arbre de sortie (8), une poulie menée (7) montée sur l'arbre de sortie (8), la poulie menée (7) comportant un autre organe non mobile (7a) et un autre organe mobile (7b), l'organe mobile (7b) étant actionné de façon similaire par un autre vérin hydraulique (7c) pour former une autre ouverture en forme de V entre l'autre organe non mobile (7a) et l'autre organe mobile (7b) et un organe de courroie flexible (9) tendu entre lesdites poulies (6 et 7), et une unité de commande électronique (100) comportant des moyens de mémoire pour stocker des données représentatives des états de fonctionnement souhaités de la transmission et des moyens de comparaison (32) pour comparter les données d'entrée des états de fonctionnement réels avec les données stockées dans lesdits moyens de mémoire, ce procédé comportant les étapes consistant à:

—détecter une ouverture réelle d'une valve de commande des gaz qui soit proportionnelle à une quantité de carburant injectée dans le moteur (1); et

—détecter une vitesse réelle de moteur,

—comparer les données détectées avec les données stockées dans lesdits moyens de mémoire; et

—régler au moins l'un desdits organes mobiles (6a) en fonction de la comparaison entre les données détectées et les données stockées; caractérisé en ce que les moyens de mémoire stockent des données représentatives d'une pluralité de relations entre l'ouverture de la valve de commande des gaz et la vitesse de moteur souhaitée pour différentes vitesses de véhicule, et le procédé comporte en outre les étapes consistant à:

—calculer une vitesse réelle de véhicule;

—calculer une vitesse de moteur souhaitée (RPMo) à partir des données stockées dans les moyens de mémoire, de telle manière que lorsque l'une parmi la pluralité des relations est choisie en fonction de la vitesse de véhicule réelle calculée, on calcule une vitesse de moteur souhaitée en fonction de l'ouverture des gaz détectée;

—comparer soit la vitesse de moteur réelle détectée, soit un rapport de vitesse réelle ($RPM_{out}$/$RPM_{in}$), avec la vitesse de moteur souhaitée ou avec un rapport de vitesse souhaité ($RPM_{out}$/RPMo); et

—contrôler une quantité de fluide hydraulique injectée dans l'un des vérins hydrauliques (6c), en fonction de la comparaison entre les vitesses de moteur ou les rapports de vitesse réels et souhaités.

2. Un procédé tel que revendiqué à la revendication 1, dans lequel la détection de l'ouverture réelle de la valve de commande des gaz est réalisée par un capteur d'ouverture des gaz (26).

3. Un procédé tel que revendiqué à la revendication 1, dans lequel la détection de l'ouverture réelle de la valve de commande des gaz est réalisée par un détecteur de pression disposé à l'intérieur d'une conduite d'admission du moteur.

4. Un procédé tel que revendiqué dans l'une quelconque des revendications 1 à 3, comportant l'étape consistant à comparer avec une constante la valeur absolue de la différence entre les vitesses de moteur réelles et souhaitées; et lorsque ladite différence est au moins égale à ladite constante, à réaliser les étapes suivantes: relier le vérin hydraulique (6c) de la poulie menante (6) à un passage de purge (50) et évacuer le fluide hydraulique du vérin, lorsque la vitesse de moteur souhaitée est supérieure à la vitesse de moteur réelle, ou bien mettre en communication ledit vérin hydraulique (6c) avec un passage d'alimentation en fluide hydraulique (18) pour un moyen de commande de débit (19), et alimenter ce vérin en fluide hydraulique lorsque la vitesse de moteur réelle est supérieure à la vitesse de moteur souhaitée, de telle manière que la vitesse de moteur réelle soit-réglée pour devenir égale à la vitesse de moteur souhaitée.

5. Un procédé tel que revendiqué dans l'une quelconque des revendications 1 à 3, comportant l'étape consistant à comparer à une constante une valeur absolue de la différence entre le rapport de vitesse souhaité et le rapport de vitesse réel; et, lorsque ladite différence est au moins égale à ladite constant, mettre en oeuvre les étapes suivantes: relier le vérin hydraulique (6c) de la poulie menante (6) au passage (18) d'alimentation en fluide hydraulique des moyens de commande de débit (19) et l'alimenter en fluide hydraulique, lorsque le rapport de vitesse souhaité est supérieur au rapport de vitesse réel, ou bien mettre en communication ledit vérin hydraulique (6c) avec un passage de purge (50) et évacuer le fluide hydraulique du vérin, lorsque le rapport de vitesse réel est supérieur au rapport de vitesse souhaité.

# Fig. 1

# Fig. 2

SENSOR FOR DETECTING ROTATING SPEED OF DRIVING PULLEY — 23

SENSOR FOR DETECTING ROTATING SPEED OF DRIVEN PULLEY — 24

SENSOR FOR DETECTING SHIFT POSITION OF TRANSMISSION — 28

ENGINE COOLANT TEMPERATURE SENSOR — 25

THROTTLE OPENING SENSOR — 26

I/F — 35

A/D — 36

38

CPU — 32

RAM — 33

ROM — 34

REGULATOR VALVE — 16

FLOW CONTROL VALVE — 19

D/A — 37

Fig. 3

# Fig. 4

START

READING THROTTLE OPENING θ AND VEHICLE SPEED V — 41

CALCULATING DESIRED ENGINE·SPEED $RPM_0$ FROM θ AND V — 42

DETECTING ACTUAL ENGINE SPEED $RPM_e$ — 43

$|RPM_0 - RPM_e| < C$ ? — 44

< 

≥

$\Delta V_i = f (RPM_0 - RPM_e)$
OUTPUT OF $\Delta V_i$ — 45

END